# EUROPÄISCHE PATENTSCHRIFT

(11) **EP 4 124 238 B1**
(45) Veröffentlichungstag und Bekanntmachung des Hinweises auf die Patenterteilung: **26.02.2025**
(21) Anmeldenummer: 22183294.2
(22) Anmeldetag: 06.07.2022
(51) Int. Cl.: A01F 25/16, A01F 25/18

(54) **VERFAHREN ZUR VERDICHTUNG EINES ERNTEGUTES**
METHOD FOR COMPRESSING A CROP
PROCÉDÉ DE COMPRESSION D'UN PRODUIT RÉCOLTÉ

(30) Priorität: 29.07.2021 DE 102021119684
(43) Veröffentlichungstag der Anmeldung: 01.02.2023
(73) Patentinhaber: Deere & Company, Moline, IL 61265 (US)
(72) Erfinder: Brocke, Stefan, Mannheim (DE); Fritz, Norbert, Mannheim (DE)
(74) Vertreter: Dehnhardt, Florian Christopher

(56) Entgegenhaltungen:
- EP-A1- 3 403 488
- EP-A1- 3 895 520

## Beschreibung

Die Erfindung betrifft ein Verfahren zur Verdichtung eines Erntegutes mit den Merkmalen des Oberbegriffes des Patentanspruches 1.

Ein derartiges Verfahren ist aus EP 1 825 740 A1 bekannt. Dort empfängt eine Steuer- und Auswerteeinheit einer landwirtschaftlichen Arbeitsmaschine ein Rückdehnungssignal als Steuerinformation. Das Rückdehnungssignal ist proportional zu einer Rückdehnung des zu verdichtenden Erntegutes. In Abhängigkeit von dem Rückdehnungsverhalten des zu verdichtenden Erntegutes kann die Arbeitsmaschine eine intensivere oder weniger intensive Verdichtung des Erntegutes veranlassen.

Ein weiteres Verfahren ist z.B. aus EP3895520 A1 bekannt.

Der vorliegenden Erfindung liegt die Aufgabe zugrunde, die Arbeitseffizienz bei dem Aufbau eines Silos zu verbessern. Diese Aufgabe wird durch ein Verfahren mit den Merkmalen des Patentanspruchs 1 gelöst. Eine korrespondierende landwirtschaftliche Arbeitsmaschine wird durch Anspruch 9 gezeigt.

Weitere vorteilhafte Ausgestaltungen des erfindungsgemäßen Verfahrens gehen aus den Unteransprüchen hervor.

Gemäß Patentanspruch 1 ist bei einem Verfahren zur Verdichtung eines Erntegutes in einem Silo mittels einer landwirtschaftlichen Maschine vorgesehen, dass deren Verdichtungsarbeit (und damit Verdichtungsleistung) in Abhängigkeit von mindestens einer Steuerinformation gesteuert wird. Als eine Steuerinformation wird ein Dichteprofil ermittelt, welches eine Soll-Dichte des Erntegutes in Abhängigkeit von einer Siloposition oder eines Siloabschnittes entlang einer vorbestimmten Silolänge des Silos repräsentiert. In Abhängigkeit von dem ermittelten Dichteprofil wird eine Fahrgeschwindigkeit der Arbeitsmaschine während des Verdichtungsvorganges bzw. während der Verdichtungsarbeit gesteuert.

Die durch die Steuerung beeinflusste Fahrgeschwindigkeit kann sich auf eine Vorwärtsfahrt und/oder auf eine Rückwärtsfahrt der Arbeitsmaschine beziehen.

Für die Steuerung der Fahrgeschwindigkeit der Arbeitsmaschine wird also zumindest das Dichteprofil als eine Steuerinformation berücksichtigt. Dabei ist nicht ausgeschlossen, dass auch noch weitere Steuerinformationen, wie beispielsweise Informationen hinsichtlich eines Fahrzeugreifendrucks, zur Beeinflussung und Steuerung der Fahrgeschwindigkeit berücksichtigt werden. Die Daten des Dichteprofils können unmittelbar zur Steuerung der Fahrgeschwindigkeit verwendet werden. Alternativ können von dem Dichteprofil spezifische Steuersignale zur Steuerung der Fahrgeschwindigkeit abgeleitet werden, so dass das Dichteprofil zumindest mittelbar einer Steuerung der Fahrgeschwindigkeit dient.

Ganz allgemein können Größen und Daten zur Ermittlung des Dichteprofils ebenfalls als Steuerinformationen betrachtet werden, da die Fahrgeschwindigkeit der Arbeitsmaschine mittelbar durch eben diese Größen und Daten gesteuert wird.

Das Dichteprofil mit der Soll-Dichte beeinflusst die Fahrgeschwindigkeit der Arbeitsmaschine und erhöht dadurch die Effizienz des Verdichtungsvorganges erheblich, da Siloabschnitte der vorbestimmten Silolänge mit einer verhältnismäßig niedrigen Soll-Dichte bereits mit einer verhältnismäßig hohen Fahrgeschwindigkeit der Arbeitsmaschine realisiert werden können. Unter Berücksichtigung dieses Zusammenhangs kann die Arbeitsmaschine einerseits in Siloabschnitten der Silolänge mit niedrigerer Soll-Dichte Arbeitszeit (durch eine höhere Fahrgeschwindigkeit) sparen und andererseits in Siloabschnitten der Silolänge mit höherer Soll-Dichte mehr Arbeitszeit (durch eine niedrigere Fahrgeschwindigkeit) investieren.

Im Ergebnis wird dann entlang der vorgegebenen Silolänge immer nur diejenige Soll-Dichte des eingelagerten Erntegutes realisiert, welche für die Stabilität der Silage bereits ausreichend ist. Diese Vorgehensweise bei der Erstellung bzw. dem Aufbau des Silos hilft, trotz Realisierung einer stabilen Silage Arbeitszeit und Maschinenaufwand zu reduzieren. Hierdurch wird eine stabile Silage sehr effizient hergestellt. Folglich werden etwaige Verschlechterungen des Nährwertgehaltes der Silage bzw. Nährstoffverluste durch Aufwärmung auf effiziente Weise vermieden.

Mit Hilfe des Dichteprofils kann die Verdichtungsarbeit beim Aufbau des Silos besonders effizient durchgeführt werden. Gleichzeitig kann die Silage während der Lagerzeit und der gesamten Entnahmezeit aus dem Silo mit einer stabilen Futterqualität zur Verfügung gestellt werden.

Insbesondere kann mit der Soll-Dichte auch das unterschiedliche Aufwärmverhalten der Silage während der Entnahme der Futter-Rate für die zu fütternden Tiere zu unterschiedlichen Jahreszeiten berücksichtigt werden. Mit unterschiedlichen Soll-Dichten entlang der Silolänge kann somit auch einer etwaigen Minderung der Futterqualität während der Entnahme und des Abbaus der Silage sehr effizient vorgebeugt werden.

Die landwirtschaftliche Arbeitsmaschine beinhaltet zumindest ein selbstfahrendes Fahrzeug (z.B. Schlepper, Traktor). Vorzugsweise ist dem Fahrzeug eine Verdichtungsvorrichtung (z.B. Silo-Verdichtungswalze) zur Verdichtung des Erntegutes zugeordnet. Alternativ kann das Fahrzeug ohne eine separate Verdichtungsvorrichtung beispielsweise mit seinen Fahrzeugreifen zur Verdichtung des Erntegutes im Silo eingesetzt werden.

Vorzugsweise wird das Erntegut schichtweise im aufzubauenden Silo zunächst verteilt und dann verdichtet, bevor auf die zuletzt verdichtete Erntegutschicht eine weitere Erntegutschicht verteilt und anschließend verdichtet wird. Dieser Prozess wird dann wiederholt, bis eine geplante oder vorbestimmte Menge des Erntegutes in der vorgegebenen Dimensionierung des Silos eingelagert ist.

Der Verdichtungsvorgang für eine einzelne Erntegutschicht enthält entweder einen einzigen Verdichtungszyklus (z.B. eine Vorwärtsfahrt oder eine kombinierte Vorwärts- und Rückwärtsfahrt der Arbeitsmaschine) oder eine Abfolge von mehreren Verdichtungszyklen (z.B. mehrere kombinierte Vorwärts- und Rückwärtsfahrten).

Das Silo (z.B. Flachsilo) weist insbesondere eine feste Bodenplatte und feste Seitenwände auf. Vorzugsweise wird frische oder vorgewelkte Biomasse (z.B. Schnittgut, Grünfuttermittel) als Erntegut in das Silo eingelagert.

Durch die Ermittlung eines spezifischen Dichteprofils kann berücksichtigt werden, dass abhängig von unterschiedlichen Einflussgrößen und -faktoren entlang der vorbestimmten Silolänge eine unterschiedlich große Soll-Dichte ausreichend ist, um eine gute Konservierung des Erntegutes und somit eine gute Stabilität der Silage zu erzielen.

Vorzugsweise werden für die Ermittlung des Dichteprofils mindestens eine der folgenden Größen berücksichtigt:
- eine vorbestimmte Menge (z.B. Volumen oder Masse) des zu verdichtenden bzw. einzulagernden Erntegutes,
- eine vorbestimmte Dimensionierung des Silos, insbesondere ein vorbestimmter Siloquerschnitt quer zur vorbestimmten Silolänge,
- eine Futter-Rate (z.B. Futtermenge oder Volumen der Silage pro Woche) für die zu fütternden Tiere,
- ein vorbestimmter Start-Zeitpunkt (z.B. Kalenderdatum) der erstmaligen Entnahme von Silage aus dem Silo,
- ein Entnahme-Zeitraum (z.B. ein kalenderbezogener Zeitraum, eine Anzahl von Tagen oder Wochen) für die Entnahme von Silage aus dem Silo,
- mindestens ein Umgebungsparameter (z.B. durchschnittliche Umgebungstemperatur, durchschnittliche Luftfeuchtigkeit) der Siloumgebung während eines Entnahme-Zeitraumes für die Entnahme von Silage aus dem Silo.

Die Werte der vorgenannten Größen sind leicht und präzise verfügbar, da sie teilweise Planungsdaten für die Silo-Dimensionierung und die spätere Benutzung des Silos repräsentieren und teilweise als Wetterdaten abgerufen werden können.

Erfindungsgemäß wird das Dichteprofil in Abhängigkeit von einem Vergleich zwischen einer Entnahme-Rate und einer Soll-Rate ermittelt. Dabei ist die Entnahme-Rate von einer in einem Entnahme-Zeitraum (z.B. mehrere Tage, eine Woche oder ein Zeitraum in einem bestimmten Kalendermonat) aus dem Silo benötigten Futtermenge für die zu fütternden Tiere abhängig. Die Soll-Rate hingegen wird unabhängig von der aus dem Silo für denselben Entnahme-Zeitraum benötigten Futtermenge ermittelt. Insbesondere wird die Soll-Rate derart ermittelt, dass eine Beeinträchtigung der Silage (Verminderung des Nährwertgehaltes, Verderben, etc.) vermieden ist. Hierbei liegt der Gedanke zugrunde, dass bei höherer Umgebungstemperatur eine schnellere Aufwärmung der Silage und somit eine raschere Verschlechterung der Futterqualität erfolgt. Mit einem bestimmten Soll-Entnahmevorschub als Soll-Rate entlang der Silolänge kann eine aufwärmungsbedingte Qualitätsminderung der noch lagernden Silage verhindert werden kann. Die Soll-Rate kann deshalb als eine mindestens erforderliche Rate betrachtet werden, mit der eine etwaige Verschlechterung der Futterqualität während der Benutzung des Silos vermieden wird.

Dieser Soll-Entnahmevorschub kann z.B. (abhängig von der Außentemperatur) im Sommer 2,5 Meter pro Woche und im Winter 1,5 Meter pro Woche betragen. Die Soll-Rate bzw. der Soll-Entnahmevorschub wird deshalb vorzugsweise als eine Soll-Geschwindigkeit entlang der Silolänge definiert, während die Entnahme-Rate vorzugsweise als eine Entnahme-Geschwindigkeit entlang der Silolänge definiert wird.

Die tatsächliche Entnahme-Rate kann in vielen Fällen nicht wesentlich geändert werden, so beispielsweise auch nicht bei einer im wesentlichen konstanten Futtermenge, die für die zu fütternden Tiere pro Zeiteinheit benötigt wird. Somit ist die Entnahme-Rate insbesondere im Winter deutlich höher als die ermittelte Soll-Rate, da die Entnahme-Rate (über die konstante Dimensionierung des Silos) an den Sommer angepasst ist, um die vorgenannten Nachteile einer verminderten Futterqualität zu vermeiden. Folglich besteht im Winter bei weitem keine Gefahr einer unerwünschten Aufwärmung der Silage.

Dieser Zusammenhang kann vorteilhaft dazu genutzt werden, für kalenderbezogene Entnahme-Zeiträume bzw. für Abschnitte entlang der Silolänge mit einer ermittelten niedrigen Soll-Rate auch die Soll-Dichte des zu verdichtenden Erntegutes niedriger anzusetzen. Da in diesem Entnahme-Zeitraum bzw. Abschnitt der Silolänge die Entnahme-Rate größer als notwendig ist, bleibt dort die niedrigere Soll-Dichte ohne negativen Einfluss auf die erwünschte Stabilität der Silage.

Zusammengefasst wird mittels eines Vergleichs zwischen den oben erläuterten Größen der Entnahme-Rate und der Soll-Rate die Ermittlung eines optimierten Dichteprofils unterstützt, welches eine deutlich verbesserte Effizienz der Verdichtungsarbeit beim Aufbau des geplanten Silos ermöglicht.

In einer bevorzugten Ausführungsform wird die bereits erläuterte Entnahme-Rate in Abhängigkeit von mindestens einer der folgenden Größen ermittelt:
- einem vorbestimmten Siloquerschnitt quer zur vorbestimmten Silolänge,
- einer Futter-Rate (z.B. Futtermenge oder Volumen der Silage pro Woche) für die zu fütternden Tiere.

Beispielsweise ergibt sich die Entnahme-Rate als eine Entnahme-Geschwindigkeit (z.B. in Meter pro Woche), indem die Futter-Rate (z.B. Futtervolumen pro Woche) und der vorbestimmte Siloquerschnitt (d.h. Silobreite x Silohöhe) als Quotienten miteinander ins Verhältnis gesetzt werden.

Die bereits erläuterte Soll-Rate wird vorteilhaft in Abhängigkeit von mindestens einer der folgenden Größen ermittelt:
- einem vorbestimmten Start-Zeitpunkt der erstmaligen Entnahme von Silage aus dem Silo,
- dem Entnahme-Zeitraum,
- mindestens einem Umgebungsparameter der Siloumgebung während des Entnahme-Zeitraumes.

Die Berücksichtigung des vorbestimmten Start-Zeitpunktes ermöglicht es, jede Siloposition einem Entnahme-Zeitpunkt bzw. Entnahme-Zeitraum innerhalb des Kalenderjahres zuzuordnen. Der Start-Zeitpunkt und die Entnahme-Zeiträume können vorteilhaft im Rahmen eines vorbekannten bzw. vorbestimmten Entnahme-Zeitprofils zur Verfügung gestellt werden. Für eine größere Genauigkeit können zusätzlich noch Umgebungsparameter (z.B. Umgebungstemperatur, Luftfeuchtigkeit) berücksichtigt werden, deren Werte zumindest als Durchschnittswerte für den jeweiligen Entnahme-Zeitpunkt bzw. Entnahme-Zeitraum bekannt sind. Somit kann mit einfachen physikalischen Größen für jede Siloposition der für eine effiziente Verdichtungsarbeit gesuchte Wert der Soll-Rate (insbesondere Soll-Geschwindigkeit) präzise ermittelt werden.

Erfindungsgemäß enthält die Arbeitsmaschine eine Steuereinheit für die Verarbeitung empfangener Daten. Mit dieser Steuereinheit kann eine automatisierte Durchführung des Verfahrens zur Verdichtung des Erntegutes unterstützt werden. Insbesondere wird in dieser Steuereinheit selbst das Dichteprofil durch eine entsprechende Datenverarbeitung ermittelt. Die Daten können beispielsweise Werte der bereits erläuterten Größen beinhalten, in deren Abhängigkeit das Dichteprofil ermittelt wird. Um die Daten mit geringem technischen Aufwand bereitzustellen, können diese vorzugsweise von einer externen Datenquelle (z.B. Datenzentrum) über eine Funkverbindung zu der Steuereinheit gesendet werden. Zusätzlich oder alternativ können Daten über eine Bedienungs-Schnittstelle der Arbeitsmaschine an die Steuereinheit gesendet werden. Somit kann die Übertragung der Daten an die Steuereinheit teil- oder vollautomatisiert durchgeführt werden, was den Fahrer der Arbeitsmaschine im Zusammenhang mit der Ermittlung des Dichteprofils entsprechend entlastet.

Eine technisch einfache und automatische Beeinflussung oder Änderung der Fahrgeschwindigkeit der Arbeitsmaschine in Abhängigkeit von dem Dichteprofil wird vorzugsweise erreicht, indem die vorgenannte Steuereinheit eine Geschwindigkeits-Steuerfunktion (z.B. Motor-Steuergerät) der Arbeitsmaschine ansteuert.

Das erfindungsgemäße Verfahren wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine schematische blockschaltbildartige Darstellung von Funktionseinheiten für eine landwirtschaftliche Arbeitsmaschine zur Durchführung des erfindungsgemäßen Verfahrens,
- Fig. 2: ein Diagramm, welches eine Dimensionierung eines Silos repräsentiert,
- Fig. 3: ein Diagramm, welches verschiedene Entnahme-Geschwindigkeiten repräsentiert,
- Fig. 4: ein Diagramm, welches ein ermitteltes Dichteprofil repräsentiert, und
- Fig. 5: ein Diagramm, welches eine Fahrgeschwindigkeit der Arbeitsmaschine in Abhängigkeit von dem ermittelten Dichteprofil repräsentiert.

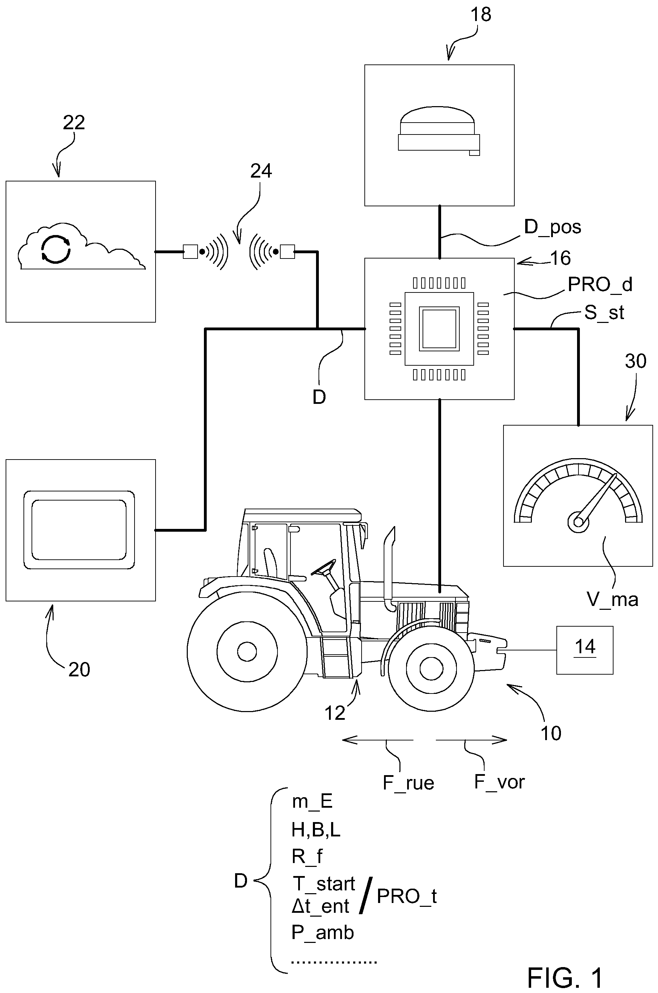

Fig. 1 zeigt eine landwirtschaftliche Arbeitsmaschine 10 mit einem Traktor 12 und einer daran frontseitig gekoppelten Verdichtungsvorrichtung 14. Letztere ist lediglich schematisch als ein Block dargestellt, welcher stellvertretend für unterschiedliche Ausführungsformen steht, z.B. für eine Silo-Verdichtungswalze. Auch wenn die Verdichtungsvorrichtung 14 in Fig. 1 frontseitig am Traktor 12 montiert ist, sind in alternativen oder ergänzenden Varianten auch heckseitig montierte Verdichtungsvorrichtungen 14 denkbar. Der Traktor 12 kann in weiteren Ausführungsformen durch ein anderes geeignetes selbstfahrendes Fahrzeug ersetzt sein.

Eine in der Arbeitsmaschine 10, genauer gesagt im Traktor 12, integrierte Steuereinheit 16 empfängt verschiedene Daten D zur Datenverarbeitung und zur Ermittlung eines aus der Datenverarbeitung resultierenden Dichteprofils PRO_d, welches noch detailliert erläutert wird. Zur Ermittlung des Dichteprofils PRO_d können ggf. auch Positionsdaten D_pos eines Positionserfassungssystems 18 (z.B. GPS) der Arbeitsmaschine 10 berücksichtigt werden.

Die Daten D können von einer im Traktor 12 integrierten Bedienungs-Schnittstelle 20 (z.B. optische Anzeigeeinheit, Bildschirm, Eingabeeinheit, etc.) beispielsweise manuell vorgegeben werden und/oder von einer externen Datenquelle 22 (z.B. externes Daten-/Rechenzentrum) über eine drahtlose Datenverbindung 24 (z.B. Mobilfunk) der Steuereinheit 16 zur Verfügung gestellt werden.

Als Daten D wird insbesondere mindestens eine Größe der nachfolgend aufgezählten Größen verwendet:
- eine vorbestimmte Menge m_E (z.B. Volumen oder Masse) des in einem Silo 28 zu verdichtenden Erntegutes 26;
- eine vorbestimmte Dimensionierung des Silos 28, insbesondere ein vorbestimmter Siloquerschnitt A als das Produkt aus einer Silohöhe H und einer Silobreite B, wobei der Siloquerschnitt A quer zu einer vorbestimmten Silolänge L verläuft;
- eine Futter-Rate R_f für die zu fütternden Tiere;
- ein vorbestimmter Start-Zeitpunkt T_start der erstmaligen Entnahme von verdichtetem Erntegut 26 aus dem Silo 28;
- ein Entnahme-Zeitraum Δt_ent für die Entnahme von verdichtetem Erntegut 26 aus dem Silo 28;
- mindestens ein Umgebungsparameter P_amb (z.B. Umgebungstemperatur, Luftfeuchtigkeit) der Umgebung des Silos 28 während eines Entnahme-Zeitraumes Δt_ent für die Entnahme von verdichtetem Erntegut 26 aus dem Silo 28.

Die vorgenannten Größen bilden teilweise Planungsdaten für die geplante Dimensionierung des Silos 28 und für die spätere Entnahme von verdichtetem Erntegut 26 aus dem Silo 28 im Rahmen eines geplanten Entnahme-Zeitprofils PRO_t. Teilweise können die vorgenannten Größen zweckmäßig als Wetterdaten abgerufen werden. Abhängig von der datentechnischen Organisation des geplanten Aufbaus des Silos 28 können die Werte der vorgenannten Größen dann über die Bedienungs-Schnittstelle 20 und/oder die externe Datenquelle 22 an die Steuereinheit 16 gesendet werden.

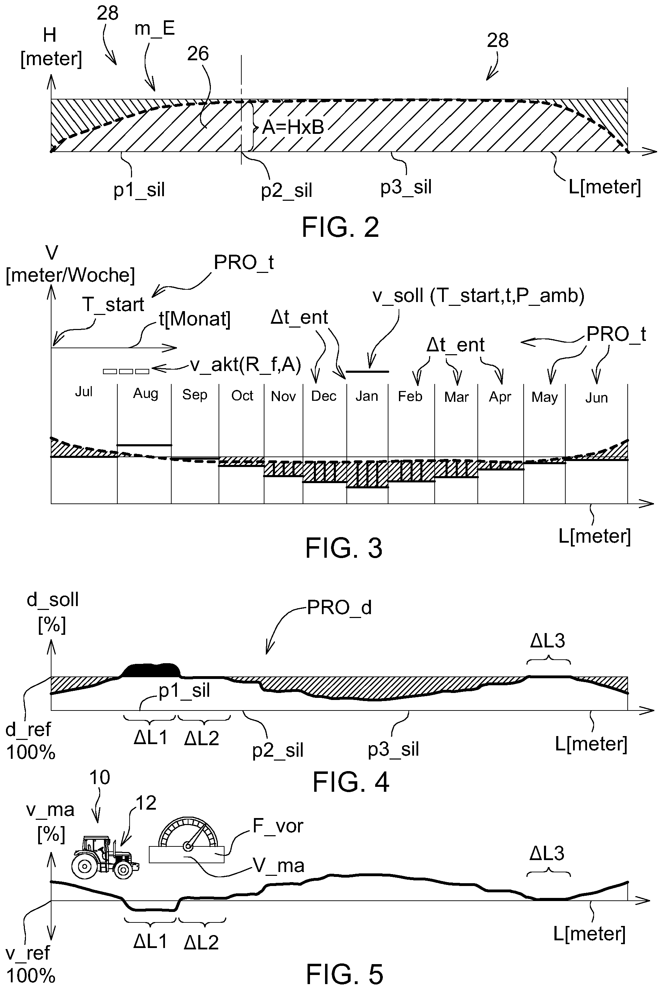

Das Dichteprofil PRO_d wird in Abhängigkeit von mindestens einer Größe der vorgenannten Größen und optional auch noch weiterer, hier nicht genannter Größen ermittelt, welche in Fig. 1 als Daten D zusammengefasst sind. Das derart ermittelte Dichteprofil PRO_d repräsentiert eine Soll-Dichte des Erntegutes 26 in Abhängigkeit von einer Siloposition entlang der vorgegebenen Silolänge L des Silos 28. In Fig. 2 sind als einzelne Silopositionen beispielhaft die Positionen p1_sil, p2_sil und p3_sil angedeutet.

In Abhängigkeit von dem ermittelten Dichteprofil PRO_d steuert die Steuereinheit 16 eine Geschwindigkeits-Steuerfunktion 30 (z.B. ein Motor-Steuergerät) der Arbeitsmaschine 10 bzw. des Traktors 12 an, um hierdurch eine Fahrgeschwindigkeit v_ma der Arbeitsmaschine 10 bzw. des Traktors 12 zu beeinflussen. Die Beeinflussung der Fahrgeschwindigkeit v_ma kann sich auf eine Vorwärtsfahrt F_vor und/oder eine Rückwärtsfahrt F_rue der Arbeitsmaschine 10 bzw. des Traktors 12 beziehen.

Zur Steuerung der Fahrgeschwindigkeit v_ma sendet die Steuereinheit 16 entsprechende Steuersignale S_st an die Geschwindigkeits-Steuerfunktion 30. Die Steuersignale S_st repräsentieren beispielsweise das Dichteprofil PRO_d oder werden in der Steuereinheit 16 durch rechnerische Ableitung von dem Dichteprofil PRO_d ermittelt.

Für den geplanten Aufbau des Silos 28 werden zunächst Dimensionierungsdaten, insbesondere die Silolänge L, die Silohöhe H und die Silobreite B vorgegeben (Fig. 2).

Aus dem Siloquerschnitt A und der bekannten Futter-Rate R_f (z.B. in Tonnen pro Woche) für die zu fütternden Tiere kann eine tatsächliche oder aktuelle Entnahme-Rate bzw. Entnahme-Geschwindigkeit v_akt (z.B. in Meter pro Woche) berechnet werden. Diese aktuelle Entnahme-Geschwindigkeit v_akt repräsentiert die in einem spezifischen Entnahme-Zeitraum Δt_ent (z.B. eine Woche) tatsächlich benötigte Futtermenge für die zu fütternden Tiere.

Die aktuelle Entnahme-Geschwindigkeit v_akt wird entlang einer Zeitachse t in jedem Entnahme-Zeitraum Δt_ent des Entnahme-Zeitprofils PRO_t mit einer Soll-Rate bzw. Soll-Geschwindigkeit v_soll verglichen (Fig. 3).

Die Soll-Rate bzw. Soll-Geschwindigkeit v_soll ist als eine erforderliche Mindest-Rate dimensioniert, um während der Futterentnahme aus dem Silo 28 unter Berücksichtigung des Entnahme-Zeitprofils PRO_t (insbesondere des Start-Zeitpunktes T_start und der Entnahme-Zeiträume Δt_ent) und mindestens einem Umgebungsparameter P_amb eine etwaige Verminderung der Futterqualität während der Benutzung des Silos 28 zu vermeiden.

Entsprechend der obigen Erläuterungen muss in Entnahme-Zeiträumen Δt_ent, in denen die tatsächliche Entnahme-Geschwindigkeit v_akt kleiner ist als die erforderliche Soll-Geschwindigkeit v_soll, bei dem Aufbau des Silos 28 eine größere Soll-Dichte d_soll bereitgestellt werden im Vergleich zu einer Referenz-Dichte d_ref = 100%. Dies ist bei dem dargestellten Beispiel im Wesentlichen nur im Entnahme-Zeitraum Δt_ent bzw. Kalendermonat August notwendig (Fig. 4). Unter Berücksichtigung des Entnahme-Zeitprofils PRO_t handelt es sich hierbei um einen Siloabschnitt ΔL1 entlang der Silolänge L.

Weiterhin sind in dem Beispiel gemäß Fig. 4 die Entnahme-Geschwindigkeit v_akt einerseits und die Soll-Geschwindigkeit v_soll andererseits in den Entnahme-Zeiträumen Δt_ent bzw. Kalendermonaten September und Mai im Wesentlichen identisch, so dass in diesen Zeiträumen die Soll-Dichte d_soll der Referenz-Dichte d_ref = 100% entspricht. Unter Berücksichtigung des Entnahme-Zeitprofils PRO_t handelt es sich hierbei um Siloabschnitte ΔL2 und ΔL3 entlang der Silolänge L.

In den übrigen Entnahme-Zeiträumen Δt_ent bzw. Kalendermonaten gemäß Fig. 4 ist die Soll-Geschwindigkeit v_soll niedriger als die tatsächliche Entnahme-Geschwindigkeit v_akt. Dort kann folglich eine niedrigere Soll-Dichte d_soll bereitgestellt werden im Vergleich zu der Referenz-Dichte d_ref = 100%.

In Abhängigkeit des vorbeschriebenen Vergleichs zwischen der Entnahme-Geschwindigkeit v_akt und der Soll-Geschwindigkeit v_soll (Fig. 3) kann das bereits erwähnte Dichteprofil PRO_d ermittelt werden (Fig. 4). Letzteres repräsentiert die Soll-Dichte d_soll des zu verdichtenden Erntegutes 26 in Abhängigkeit von der jeweiligen Siloposition (z.B. p1_sil, p2_sil, p3_sil) oder des jeweiligen Siloabschnittes (z.B. ΔL1, ΔL2, ΔL3) entlang der Silolänge L.

Wie bereits erläutert, wird über das ermittelte Dichteprofil PRO_d die Fahrgeschwindigkeit v_ma der Arbeitsmaschine 10, 12 gesteuert (Fig. 5). Entsprechend der erläuterten Zusammenhänge wird in dem Siloabschnitt ΔL1 die Fahrgeschwindigkeit v_ma verlangsamt im Vergleich zu einer Referenz-Geschwindigkeit v_ref = 100%, welche mit der Referenz-Dichte d_ref korrespondiert. In dem Siloabschnitt ΔL1 muss folglich mehr Arbeitszeit für die Verdichtung investiert werden.

In den Siloabschnitten ΔL2 und ΔL3 entspricht die Fahrgeschwindigkeit v_ma der Referenz-Geschwindigkeit v_ref.

Hingegen kann in den übrigen Siloabschnitten der Silolänge L die Fahrgeschwindigkeit v_ma gegenüber der Referenz-Geschwindigkeit v_ref erhöht werden und somit Arbeitszeit während des Verdichtungsvorganges eingespart werden.

Insgesamt kann mit Hilfe des optimierten Dichteprofils PRO_d die Effizienz der Verdichtungsarbeit bei dem Aufbau des Silos 28 deutlich verbessert werden.

Der guten Ordnung halber sei erwähnt, dass in den Zeichnungen dargestellte schematische Details nicht notwendigerweise maßstäblich sind. Auch die dargestellten Diagramme erheben keinen Anspruch auf Maßstäblichkeit oder auf exakte quantitative Werte.

## Patentansprüche

1. Verfahren zur Verdichtung eines Erntegutes (26) in einem Silo (28) mittels einer landwirtschaftlichen Arbeitsmaschine (10, 12, 14), deren Verdichtungsarbeit in Abhängigkeit von mindestens einer Steuerinformation (D, D_pos, PRO_d, S_st) gesteuert wird, wobei
- als eine Steuerinformation ein Dichteprofil (PRO_d) ermittelt wird, welches eine Soll-Dichte (d_soll) des Erntegutes (26) in Abhängigkeit von einer Siloposition (p1_sil, p2_sil, p3_sil) entlang einer vorgegebenen Silolänge (L) des Silos (28) oder eines Siloabschnittes (ΔL1, ΔL2, ΔL3) entlang einer vorgegebenen Silolänge (L) des Silos (28) repräsentiert, und
- in Abhängigkeit von dem ermittelten Dichteprofil (PRO_d) eine Fahrgeschwindigkeit (v_ma) der Arbeitsmaschine (10, 12) während der Verdichtungsarbeit gesteuert wird, **dadurch gekennzeichnet, dass** das Dichteprofil (PRO_d) in Abhängigkeit von einem Vergleich zwischen einer Entnahme-Rate (v_akt) und einer Soll-Rate (v_soll) ermittelt wird, wobei
- die Entnahme-Rate (v_akt) von einer in einem Entnahme-Zeitraum (Δt_ent) aus dem Silo (28) tatsächlich benötigten Futtermenge (R_f) für zu fütternde Tiere abhängig ist, und
- die Soll-Rate (v_soll) als ein Soll-Entnahmevorschub unabhängig von der für denselben Entnahme-Zeitraum (Δt_ent) aus dem Silo (28) benötigten Futtermenge (R_f) ermittelt wird.

2. Verfahren nach Anspruch 1, **dadurch gekennzeichnet, dass** das Dichteprofil (PRO_d) in Abhängigkeit von mindestens einer der folgenden Größen ermittelt wird:
- eine vorbestimmte Menge (m_E) des zu verdichtenden Erntegutes (26),
- eine vorbestimmte Dimensionierung des Silos (28), insbesondere ein vorbestimmter Siloquerschnitt (A) quer zur vorbestimmten Silolänge (L),
- eine Futter-Rate (R_f) für zu fütternde Tiere,
- ein vorbestimmter Start-Zeitpunkt (T_start) der erstmaligen Entnahme von verdichtetem Erntegut (26) aus dem Silo (28),
- ein Entnahme-Zeitraum (Δt_ent) für die Entnahme von verdichtetem Erntegut (26) aus dem Silo (28),
- mindestens ein Umgebungsparameter (P_amb) der Siloumgebung während eines Entnahme-Zeitraumes (Δt_ent) für die Entnahme von verdichtetem Erntegut (26) aus dem Silo (28).

3. Verfahren nach Anspruch 1 oder 2 **dadurch gekennzeichnet, dass** die Entnahme-Rate (v_akt) als eine Entnahme-Geschwindigkeit entlang der Silolänge (L) definiert wird und die Soll-Rate (v_soll) als eine Soll-Geschwindigkeit entlang der Silolänge (L) definiert wird.

4. Verfahren nach einem der vorhergehenden Ansprüche,
**dadurch gekennzeichnet, dass** die Entnahme-Rate (v_akt) in Abhängigkeit von mindestens einer der folgenden Größen ermittelt wird:
- einem vorbestimmten Siloquerschnitt (A) quer zur vorbestimmten Silolänge (L),
- einer Futter-Rate (R_f) für zu fütternde Tiere.

5. Verfahren nach einem der vorhergehenden Ansprüche,
**dadurch gekennzeichnet, dass** die Soll-Rate (v_soll) in Abhängigkeit von mindestens einer der folgenden Größen ermittelt wird:
- einem vorbestimmten Start-Zeitpunkt (T_start) der erstmaligen Entnahme von verdichtetem Erntegut (26) aus dem Silo (28),
- dem Entnahme-Zeitraum (Δt_ent),
- mindestens einem Umgebungsparameter (P_amb) der Umgebung des Silos (28) während des Entnahme-Zeitraumes (Δt_ent).

6. Verfahren nach einem der vorhergehenden Ansprüche,
**dadurch gekennzeichnet, dass** eine Steuereinheit (16) der Arbeitsmaschine (10, 12) Daten (D, D_pos) zur Ermittlung des Dichteprofils (PRO_d) empfängt.

7. Verfahren nach Anspruch 6, **dadurch gekennzeichnet, dass** die Daten (D, D_pos) zumindest teilweise von einer Bedienungs-Schnittstelle (20) der Arbeitsmaschine (10, 12) und/oder von einer externen Datenquelle (22) an die Steuereinheit (16) gesendet werden.

8. Verfahren nach Anspruch 6 oder 7, **dadurch gekennzeichnet, dass** die Steuereinheit (16) in Abhängigkeit von dem ermittelten Dichteprofil (PRO_d) eine Geschwindigkeits-Steuerfunktion (30) der Arbeitsmaschine (10, 12) ansteuert.

9. Landwirtschaftliche Arbeitsmaschine (10, 12) mit einer Steuereinheit (16), die zur Durchführung des Verfahrens nach einem der vorhergehenden Ansprüche eingerichtet ist.

## Claims

1. Method for compacting a harvested crop (26) in a silo (28) by means of an agricultural working machine (10, 12, 14), the compaction work of which is controlled in dependence on at least one piece of control information (D, D_pos, PRO_d, S_st), wherein
- a density profile (PRO_d), which represents a target density (d_soll) of the harvested crop (26) in dependence on a silo position (p1_sil, p2_sil, p3_sil) along a predetermined silo length (L) of the silo (28) or a silo portion (ΔL1, ΔL2, ΔL3) along a predetermined silo length (L) of the silo (28), is determined as a piece of control information, and
- a travel speed (v_ma) of the working machine (10, 12) is controlled during the compaction work in dependence on the determined density profile (PRO_d), **characterized in that** the density profile (PRO_d) is determined in dependence on a comparison between an extraction rate (v_akt) and a target rate (v_soll), wherein
- the extraction rate (v_akt) is dependent on a feed quantity (R_f) for animals to be fed which is actually required in an extraction time period (Δt_ent) from the silo (28), and
- the target rate (v_soll) is determined as a target feedout rate independently of the feed quantity (R_f) required for the same extraction time period (Δt_ent) from the silo (28).

2. Method according to Claim 1, **characterized in that** the density profile (PRO_d) is determined in dependence on at least one of the following variables:
- a predetermined quantity (m_E) of the harvested crop (26) to be compacted,
- a predetermined dimensioning of the silo (28), in particular a predetermined silo cross section (A) transversely to the predetermined silo length (L),
- a feed rate (R_f) for animals to be fed,
- a predetermined start time (T_start) of the first extraction of compacted harvested crop (26) from the silo (28),
- an extraction time period (Δt_ent) for the extraction of compacted harvested crop (26) from the silo (28),
- at least one environmental parameter (P_amb) of the silo environment during an extraction time period (Δt_ent) for the extraction of compacted harvested crop (26) from the silo (28).

3. Method according to Claim 1 or 2, **characterized in that** the extraction rate (v_akt) is defined as an extraction speed along the silo length (L) and the target rate (v_soll) is defined as a target speed along the silo length (L).

4. Method according to one of the preceding claims, **characterized in that** the extraction rate (v_akt) is determined in dependence on at least one of the following variables:
- a predetermined silo cross section (A) transversely to the predetermined silo length (L),
- a feed rate (R_f) for animals to be fed.

5. Method according to one of the preceding claims, **characterized in that** the target rate (v_soll) is determined in dependence on at least one of the following variables:
- a predetermined start time (T_start) of the first extraction of compacted harvested crop (26) from the silo (28),
- the extraction time period (Δt_ent),
- at least one environmental parameter (P_amb) of the environment of the silo (28) during the extraction time period (Δt_ent).

6. Method according to one of the preceding claims, **characterized in that** a control unit (16) of the working machine (10, 12) receives data (D, D_pos) for determining the density profile (PRO_d) .

7. Method according to Claim 6, **characterized in that** the data (D, D_pos) are at least partially transmitted from a user interface (20) of the working machine (10, 12) and/or from an external data source (22) to the control unit (16).

8. Method according to Claim 6 or 7, **characterized in that** the control unit (16) activates a speed control function (30) of the working machine (10, 12) in dependence on the determined density profile (PRO_d).

9. Agricultural working machine (10, 12) with a control unit (16) which is designed for carrying out the method according to one of the preceding claims.

## Revendications

1. Procédé permettant de compacter un produit récolté (26) dans un silo (28) au moyen d'une machine de travail agricole (10, 12, 14) dont le travail de compactage est commandé en fonction d'au moins une information de commande (D, D_pos, PRO_d, S_st), dans lequel
- en tant qu'information de commande, un profil de densité (PRO_d) est établi qui représente une densité théorique (d_soll) du produit récolté (26) en fonction d'une position de silo (p1_sil, p2_sil, p3_sil) le long d'une longueur de silo prédéfinie (L) du silo (28) ou d'une section de silo (ΔL1, ΔL2, ΔLs) le long d'une longueur de silo (L) prédéfinie du silo (28), et
- une vitesse de déplacement (v_ma) de la machine de travail (10, 12) pendant le travail de compactage est commandée en fonction du profil de densité (PRO_d) établi, **caractérisé en ce que** le profil de densité (PRO_d) est établi en fonction d'une comparaison entre un taux de prélèvement (v_akt) et un taux théorique (v_soll), dans lequel
- le taux de prélèvement (v_akt) dépend d'une quantité de fourrage (R_f) pour des animaux à nourrir réellement nécessaire dans une période de prélèvement (Δt_ent) à partir du silo (28), et
- le taux théorique (v_soll) est établi en tant qu'avance de prélèvement théorique indépendamment de la quantité de fourrage (R_f) nécessaire pour la même période de prélèvement (Δt_ent) à partir du silo (28).

2. Procédé selon la revendication 1, **caractérisé en ce que** le profil de densité (PRO_d) est établi en fonction d'au moins l'une des grandeurs suivantes :
- une quantité prédéterminée (m_E) du produit récolté (26) à compacter,
- un dimensionnement prédéterminé du silo (28), en particulier une section transversale de silo (A) prédéterminée transversalement à la longueur de silo (L) prédéterminée,
- un taux de fourrage (R_f) pour des animaux à nourrir,
- un instant de départ (T_start) prédéterminé du premier prélèvement d'un produit récolté (26) compacté à partir du silo (28),
- une période de prélèvement (Δt_ent) pour le prélèvement d'un produit récolté (26) compacté à partir du silo (28),
- au moins un paramètre d'environnement (P_amb) de l'environnement de silo pendant une période de prélèvement (Δt_ent) pour le prélèvement d'un produit récolté (26) compacté à partir du silo (28).

3. Procédé selon la revendication 1 ou 2, **caractérisé en ce que** le taux de prélèvement (v_akt) est défini en tant que vitesse de prélèvement le long de la longueur de silo (L), et le taux théorique (v_soll) est défini en tant que vitesse théorique le long de la longueur de silo (L).

4. Procédé selon l'une quelconque des revendications précédentes,
**caractérisé en ce que** le taux de prélèvement (v_akt) est établi en fonction d'au moins l'une des grandeurs suivantes :
- une section transversale de silo (A) prédéterminée transversalement à la longueur de silo (L) prédéterminée,
- un taux de fourrage (R_f) pour des animaux à nourrir.

5. Procédé selon l'une quelconque des revendications précédentes,
**caractérisé en ce que** le taux théorique (v_soll) est établi en fonction d'au moins l'une des grandeurs suivantes :
- un instant de départ (T_start) prédéterminé du premier prélèvement d'un produit récolté (26) compacté à partir du silo (28),
- la période de prélèvement (Δt_ent),
- au moins un paramètre d'environnement (P_amb) de l'environnement du silo (28) pendant la période de prélèvement (Δt_ent).

6. Procédé selon l'une quelconque des revendications précédentes,
**caractérisé en ce qu'**une unité de commande (16) de la machine de travail (10, 12) reçoit des données (D, D_pos) pour établir le profil de densité (PRO _d).

7. Procédé selon la revendication 6, **caractérisé en ce que** les données (D, D_pos) sont envoyées à l'unité de commande (16) au moins en partie par une interface d'utilisation (20) de la machine de travail (10, 12) et/ou par une source de données externe (22).

8. Procédé selon la revendication 6 ou 7, **caractérisé en ce que** l'unité de commande (16) pilote une fonction de commande de vitesse (30) de la machine de travail (10, 12) en fonction du profil de densité (PRO_d) établi.

9. Machine de travail agricole (10, 12), comprenant une unité de commande (16) qui est conçue pour exécuter le procédé selon l'une quelconque des revendications précédentes.
